# EUROPEAN PATENT APPLICATION

(11) **EP 4 763 472 A1**
(43) Date of publication of application: **24.06.2026**
(21) Application number: 24221685.1
(22) Date of filing: 19.12.2024
(51) Int. Cl.: B29C 48/36, B29B 7/50, B29C 48/92, B29C 48/68, B29C 48/685, B29C 48/25, B29C 48/80

(54) **EXTRUSION SYSTEM**

(71) Applicant: Frazer-Nash Manufacturing Limited, Petersfield Hampshire GU32 3FG (GB)
(72) Inventor: MORTLOCK, Paul, Petersfield, GU32 3FG (GB); HUGHES, John, Petersfield, GU32 3FG (GB)
(74) Representative: EIP

(57) **Abstract**

Disclosed it an extruder barrel assembly defining an extrusion bore. The extruder barrel assembly comprises a rotatable barrel segment defining a portion of the extrusion bore between an inlet for receiving extrudate at a first end of the rotatable barrel segment and an outlet for expelling extrudate at a second end of the rotatable barrel segment opposite the first end, and at least one other barrel segment, each at least one other barrel segment defining a respective portion of the extrusion bore. The rotatable barrel segment is rotatable relative to the at least one other barrel segment, about a longitudinal axis of the portion of the extrusion bore between the first and second ends.

## Description

### Technical Field

The present disclosure relates to extrusion systems such as to food extrusion systems and plastic extrusion systems. Particular examples relate to extrusion systems that heat the product being extruded.

### Background

Use of extrusion systems is widespread, with a wide variety of products being made by extrusion processes. However, challenges remain in providing extrusion systems, in particular extruder barrels, which can produce products with various desirable characteristics. An extruder barrel is generally formed of a plurality of barrel segments that are connected to one another to define an extrusion bore. At least some of the barrel segments have a respective extrusion screw segment extending therethrough. The extrusion screw segments are generally releasably attached to one another to form an extrusion screw, which is driven by a motor. Rotation of the screw causes extrudate to progress along the extrusion bore. In order to achieve different properties in extruded products, the nature of the barrel segments can be varied. For example, barrel segments can each have different features which interact with the extrudate in particular ways as it passes through the individual barrel segments. Whilst changing these features and their resultant interactions is possible, this typically involves removing certain barrel segments and replacing them with barrel segments having alternative features.

### Summary

According to a first aspect of the present invention, there is provided an extruder barrel assembly having an extrusion bore, the extruder barrel assembly comprising: a rotatable barrel segment defining a portion of the extrusion bore between an inlet for receiving extrudate at a first end of the rotatable barrel segment and an outlet for expelling extrudate at a second end of the rotatable barrel segment opposite the first end; and at least one other barrel segment, each at least one other barrel segment defining a respective additional portion of the extrusion bore, wherein the rotatable barrel segment is rotatable relative to the at least one other barrel segment, about a longitudinal axis of the portion of the extrusion bore between the first and second ends.

In typical extruder barrels, a plurality of barrel segments is arranged in series adjacent to one another so that the barrel segments together form a single extruder barrel and thereby define an extrusion bore extending therethrough. An extrusion screw, or a plurality of meshed extrusion screws, extends through at least some of the barrel segments and is/are rotatable by a drive arrangement to move extrudate through the extrusion bore formed by the barrel segments. Certain barrel segments can also be arranged to be heated or cooled.

Each extrusion screw comprises a plurality of screw sections, each screw section being associated with and extending through a respective barrel segment. Some of the screw sections can have different characteristics, such as a particular pitch, width and/or angle of a thread extending around the screw section, which may be different to threads in other screw sections of the same extrusion screw.

Operation of a drive arrangement causes rotation of the extrusion screw(s) within the extrusion bore. Variations in energy imparted on extrudate in the extrusion bore can be achieved by varying characteristics of the extrusion screw along its length and varying temperatures along the length of the extruder barrel assembly; these variations can result not only in a different magnitude of energy being imparted to extrudate at different locations along the extruder barrel assembly but also potentially energy type and/or direction.

The screw sections are arranged with respect to one another in a particular sequence to result in a desired extrudate output from the extruder barrel assembly. To change the nature of the extrudate which is produced by the extruder barrel assembly, for example, to generate a different commercial product, the particular sequence of the screw sections may need to be altered, which can be a complex and time-consuming procedure, requiring disassembly and subsequent reassembly of the various barrel segments and possibly screw sections. An optimal sequence of screw sections may in fact vary during manufacture of different batches of the same commercial product, for example due to variations in properties of input materials. In extrusion of food products, for instance, natural input materials or ingredients such as grain may have different moisture levels from one batch to the next, which may change the process required to generate a desired extrudate with particular characteristics, such as a certain texture, from the extruder barrel assembly. Such ingredient variations can exacerbate disadvantages resulting from a need for repeated disassembly and reassembly of barrel segments and/or screw sections in known extruder barrel assemblies.

In contrast, providing an extruder barrel assembly with a rotatable barrel segment enables the rotatable barrel segment to selectively impart different energy to extrudate travelling within the extruder barrel assembly, depending on whether and how the rotatable barrel segment is rotating relative to the at least one other barrel segment. This may allow fine tuning of the extrudate that is produced in the extruder barrel assembly, without a need to disassemble and reassemble the component segments of the extruder barrel assembly. This offers a reduction in downtime for an extrusion system comprising the rotatable barrel segment.

The rotatable barrel segment and the at least one other barrel segment may each be releasably connectable to one another. This may provide modularity of barrel segments within the extruder barrel assembly. Such modularity may provide greater control over characteristics of the product that is produced in the extruder barrel assembly, depending on the arrangement of the rotatable barrel segment and the at least one other barrel segment.

When connected to one another, the portion of the extrusion bore defined by the rotatable barrel segment and the at least one other barrel segment may be co-axial. Providing co-axial portions of the extrusion bore may reduce losses within the extrusion bore, which may increase efficiency of the extruder barrel assembly.

The rotatable barrel segment may be rotatable at different speeds. This may provide improved control over characteristics of the extrudate that is produced in the extruder barrel assembly, without a need to disassemble and reassemble the component segments of the extruder barrel assembly.

The rotatable barrel segment may be rotatable in different circumferential directions about the longitudinal axis of the portion of the extrusion bore between the first and second ends of the rotatable barrel segment. This may increase or decrease pressure within the extrusion bore, depending on whether the rotatable barrel segment is rotated with, or against, a direction of rotation of extrudate within the remainder of the extrusion bore, i.e. in the at least one other barrel segment. Again, this may provide improved control over characteristics of the extrudate that is produced in the extruder barrel assembly, without a need to disassemble and reassemble the component parts of the extruder barrel assembly.

The rotatable barrel segment may comprise a thermal regulator configured to regulate a temperature within the portion of the extrusion bore between the inlet and the outlet of the rotatable barrel segment. This may provide yet further improved control over characteristics of the extrudate that is produced in the extruder barrel assembly, without a need to disassemble and reassemble the component parts of the extruder barrel assembly. The thermal regulator may comprise a heater and/or a cooler to control thermal energy in extrudate travelling between the inlet and the outlet of the rotatable barrel segment.

The rotatable barrel segment may comprise one or more features protruding radially into the portion of the extrusion bore between the inlet and the outlet of the rotatable barrel portion, the one or more features configured to impart mechanical energy to extrudate travelling from the inlet to the outlet of the rotatable barrel segment. The provision of the one or more features for providing additional interaction with the extrudate may help to provide desired characteristics in a product that is output from the extruder barrel assembly. For example, the one or more features may be arranged to increase or decrease pressure within the portion of the extrusion bore that is in the rotatable barrel section, for example depending on a speed and/or direction of rotation of the rotatable barrel segment, and on the profile and/or arrangement of the one or more features with respect to the extrudate.

The one or more features may comprise a helix extending around a surface defining the portion of the extrusion bore between the inlet and the outlet of the rotatable barrel segment. A helical configuration may help to propel extrudate from the inlet to the outlet of the rotating barrel segment. A helical configuration may exert a substantially constant force on extrudate travelling between the inlet and the outlet of the rotating barrel segment.

The one or more features may comprise a double helix. This may increase mechanical energy imparted to extrudate travelling between the inlet and the outlet of the rotatable barrel segment compared with a single helix.

The one or more features may be unitary with a surface of the rotatable barrel segment defining the portion of the extrusion bore between the inlet and the outlet of the rotatable barrel segment. This may reduce manufacturing and/or assembly time for the rotatable barrel segment. This may also increase a strength and/or rigidity of the one or more features which may, in turn, allow a higher pressure to be employed within the extruder barrel assembly.

The one or more features may comprise a vane, wherein the vane is movable relative to a surface of the rotatable barrel segment defining the portion of the extrusion bore between the inlet and the outlet of the rotatable barrel segment, to change an angle of the vane relative to the longitudinal axis of the portion of the extrusion bore between the first and second ends of the rotatable barrel segment. This may provide improved control over characteristics of the product that is produced in the extruder barrel assembly, without a need to disassemble and reassemble components of the extruder barrel assembly to alter product characteristics in another way. A change in angle of the vane may change the energy imparted to extrudate travelling between the inlet and the outlet of the rotatable barrel portion.

The rotatable barrel segment may comprise a plurality of such vanes. The plurality of vanes may be movable together relative to the surface of the rotatable barrel segment defining the portion of the extrusion bore between the inlet and the outlet of the rotatable barrel segment, which could enable use of a relatively simple actuation arrangement for moving the vanes. The plurality of vanes may alternatively be independently movable relative to the surface of the rotatable barrel segment defining the portion of the extrusion bore between the inlet and the outlet of the rotatable barrel segment. This may provide further improved control over characteristics of the product that is produced in the extruder barrel assembly.

The rotatable barrel segment may comprise a housing and a liner, wherein the liner is releasably locatable within the housing and defines the portion of the extrusion bore between the inlet and the outlet of the rotatable barrel segment. The liner may thus be removable from the housing to enable it to be replaced by another liner. The liner may define the one or more features, for example, and different types of liner could incorporate different features. Different liner types could have different cross-sectional diameters. Thus, liner selection could depend on particular characteristics which are desired in the product to be produced in the extruder barrel assembly.

A separate housing and liner also facilitates maintenance of the rotatable barrel segment. Over time, features within the rotatable barrel segment, including a surface which defines the extrusion bore, may become worn or otherwise damaged. Providing a removable liner allows replacement and/or repair of only part of the rotatable barrel segment, which is a simpler and more cost-effective step than providing a completely new rotatable barrel segment or taking the rotatable barrel segment entirely out of use for repair.

The housing and the liner may be rotatable together, about the longitudinal axis of the portion of the extrusion bore between the first and second ends of the rotatable barrel segment, when the liner is releasably located within the housing. This may provide a relatively simple construction arrangement for the housing and liner. Alternatively, the housing may be fixed, and the liner may be rotatable relative to the housing, about the longitudinal axis of the portion of the extrusion bore between the first and second ends of the rotatable barrel segment, when the liner is releasably located within the housing. When the housing is fixed or non-rotatable, a reduced amount of energy may be required to rotate the rotatable barrel segment, compared with rotating both the liner and the housing.

The portion of the extrusion bore between the inlet and the outlet of the rotatable barrel segment may have a different diameter to the respective portion of the extrusion bore defined by one or more of the at least one other barrel segment(s). This may provide improved control over characteristics of the product that is produced in the extruder barrel assembly.

The rotating barrel segment may be free of an extrusion screw. Accordingly, disassembly and reassembly of the extruder barrel assembly may be simplified and performed more quickly. An extrusion screw is a screw disposed within an extrusion bore of an extruder barrel, and which rotates within the extrusion bore without contacting a surface defining the extrusion bore.

The rotatable barrel segment may comprise an additive port configured to permit an additive to be introduced into the portion of the extrusion bore extending through the rotatable barrel segment. Accordingly, one or more characteristics of extrudate travelling from the inlet to the outlet of the rotatable barrel segment may be altered by the additive. The additive may comprise one or both of steam and liquid, for example comprising a dye.

The extrusion bore may comprise two or more branches, at least one of which comprises the rotatable barrel segment. | Splitting the extrusion bore into multiple branches may enable different treatment of separate streams of extrudate travelling along the different routes provided by the different branches, resulting in multiple products being output from the extruder barrel assembly, each potentially having different characteristics from the other. As an example, a first branch of the extrusion bore may have a different diameter to a second branch of the extrusion bore, which may result in different pressures being present in each of those two branches.

Typically, downstream of a split in an extrusion bore into multiple branches, rotational agitation of extrudate is not possible because an extrusion screw cannot extend through the extrusion bore beyond the split. Provision of a rotatable barrel segment in one or more of the branches, however, enables such rotational agitation to further process the extrudate within the branches. As an example, where each of two branches has a rotatable barrel segment, the rotatable barrel segment comprised in the first branch may be configured to rotate at a different speed to the rotatable barrel segment comprised in the second branch, which may result in extrudate expelled from the first branch having different characteristics to extrudate expelled from the second branch.

The extrusion bore may comprise an additive port disposed in one or more of the branches of the extrusion bore, the, or each, additive port configured to selectively permit an additive to be introduced into the extrusion bore. Accordingly, one or more characteristics of extrudate travelling through the extrusion bore in the region of and/or downstream of the additive port(s) may be altered by the additive. The additive may comprise one or both of steam and colour. The additive port(s) may be upstream of a rotatable barrel segment of the extruder barrel assembly so that the additive may be more thoroughly mixed into extrudate travelling through the rotatable barrel segment downstream of the additive port(s), compared with a system in which extrudate is not rotationally agitated downstream of the additive port(s).

The extruder barrel assembly may comprise a plurality of rotatable barrel segments. This may provide improved control over characteristics of the product that is produced in the extruder barrel assembly, without a need to disassemble and reassemble the extruder barrel assembly to switch varied fixed barrel segments in and out. In other words, the rotatable barrel segment can compensate for other features that might otherwise be included in a fixed barrel segment to affect extrudate therein, for example by being rotatable at different speeds, or in a different direction.

The plurality of rotatable barrel segments may be arranged in series directly adjacent to one another. Alternatively, the plurality of rotatable barrel segments may be arranged in series and separated from one another by another barrel segment of the at least one other barrel segment, for example a non-rotatable or fixed barrel segment.

Two or more of the plurality of rotatable barrel segments may be rotatable independently of one another. This may provide improved control over characteristics of the product that is produced in the extruder barrel assembly, compared with dependent rotation of two or more of the plurality of rotatable barrel segments. Two or more of the plurality of rotatable barrel segments may be rotatable at different speeds and/or in varying circumferential directions to one another, for example.

Each barrel segment of the at least one other barrel segment may be a rotatable barrel segment. This may provide improved control over characteristics of the product that is output from the extruder barrel assembly compared with the extruder barrel assembly having non-rotatable barrel segments. This may also increase adjustability of the extruder barrel assembly, for example during use of the extruder barrel assembly for extrusion, compared with the at least one other barrel segment comprising non-rotatable, or fixed, barrel segments. In some such examples, the extruder barrel assembly may be free of an extrusion screw. Accordingly, assembly and disassembly of the extruder barrel assembly may be simplified.

According to a second aspect of the present invention, there is provided an extrusion system comprising an extruder barrel assembly according to the first aspect of the invention, and a drive system configured to selectively rotate the, or each, rotatable barrel segment.

As discussed with reference to the first aspect, such an extrusion system may provide improved control over characteristics of the product that is output from the extruder barrel assembly compared with an extrusion system having an alternative extruder barrel assembly.

The extruder barrel assembly may comprise a plurality of rotatable barrel segments, and the drive system may be configured to rotate at least two of the plurality of rotatable barrel segments independently of one another. This may provide improved control over characteristics of the product that is output from the extruder barrel assembly compared with an extrusion system in which the drive system is configured to rotate the at least two of the plurality of rotatable barrel segments together.

According to a third aspect of the present invention, there is provided an extruder barrel system comprising: a rotatable barrel segment defining a bore having an inlet to receive extrudate at a first end of the rotatable barrel segment and an outlet through which extrudate can be expelled from a second end of the rotatable barrel segment opposite the first end; and a drive system configured to rotate the rotatable barrel segment about a longitudinal axis of the bore, the longitudinal axis extending between the first and second end.

Such an extruder barrel system may provide improved control over characteristics of the product that is output from an extruder barrel assembly with which the extruder barrel arrangement is used. The extruder barrel arrangement may be retrofitted to an existing extruder barrel, for example otherwise comprising non-rotatable barrel segments.

The rotatable barrel segment may have any of the preferred features discussed with reference to the first aspect of the invention.

According to a fourth aspect of the present invention, there is provided an extruder barrel assembly comprising a plurality of barrel segments that together form the extruder barrel assembly and define an extrusion bore extending therethrough, wherein at least one of the plurality of barrel segments is free of an extrusion screw and is rotatable relative to at least one other of the plurality of barrel segments, about a longitudinal axis of a portion of the extrusion bore extending through the respective barrel segment.

Provision of the at least one of the plurality of barrel segments that is free of an extrusion screw and rotatable relative to at least one other of the plurality of barrel segments may provide improved control over characteristics of the product that is output from an extruder barrel assembly, as discussed in more detail with respect to the first aspect of the invention.

The at least one of the plurality of barrel segments that is free of an extrusion screw and rotatable relative to at least one other of the plurality of barrel segments may have any of the preferred features discussed with reference to the first aspect of the invention.

Further features and advantages of the invention will become apparent from the following description of preferred embodiments of the invention, given by way of example only, which is made with reference to the accompanying drawings.

### Brief Description of the Drawings

Figure 1 is a schematic side view of an extrusion system according to an example;
Figure 2 is a schematic cross-sectional view of an extruder barrel assembly of the extrusion system of Figure 1, having barrel segments arranged in a first configuration;
Figure 3 is a schematic cross-sectional view of the extruder barrel assembly of Figure 2, having barrel segments arranged in a second configuration;
Figure 4 is a schematic cross-sectional view of the extruder barrel assembly of Figure 2, having barrel segments arranged in a third configuration;
Figure 5 is a perspective view of part of an extrusion system according to an example;
Figure 6 is a cross-sectional view of the part of the extrusion system of Figure 5, taken orthogonal to a direction of extrusion in plane A of Figure 5;
Figure 7 is a cross-sectional view of the part of the extrusion system of Figure 5, taken parallel to a direction of extrusion in plane B of Figure 5;
Figure 8 is a schematic perspective view of an example of a rotatable barrel segment of an extruder barrel assembly; and
Figure 9 is a schematic top view of the rotatable barrel segment of Figure 8 in use.

### Detailed Description

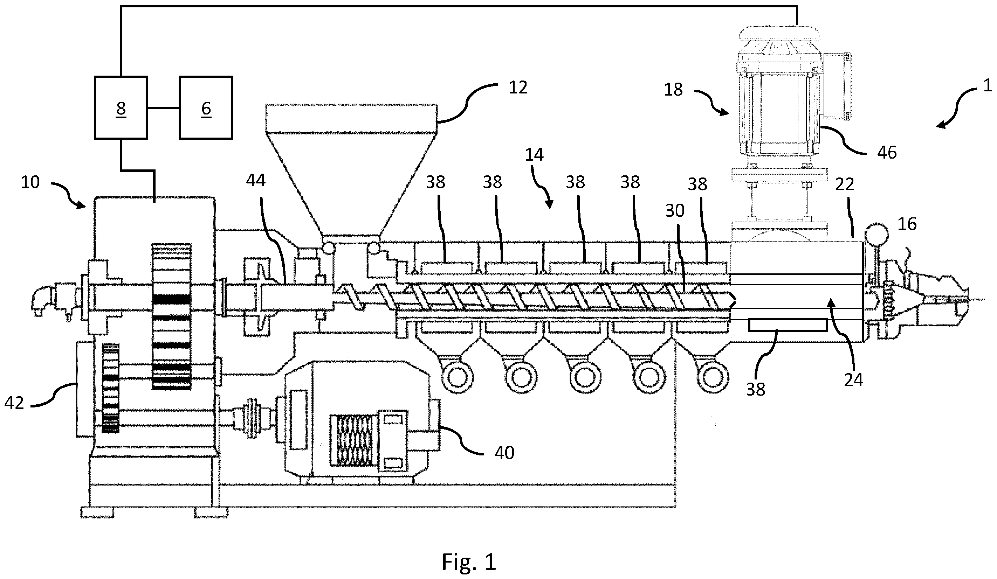

Figure 1 shows an extrusion system 1 according to an example. The extrusion system 1 has a user interface 6, a controller 8, a first drive system 10, a hopper 12, an extruder barrel assembly 14, a die plate 16 at an opposite end of the extruder barrel assembly 14 to the hopper 12, and a second drive system 18.

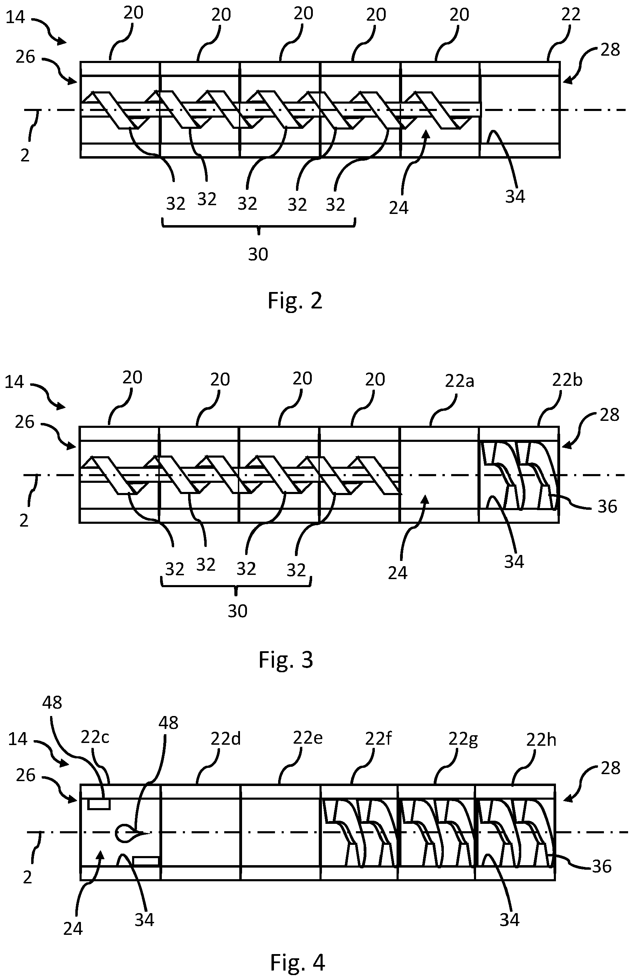

The extruder barrel assembly 14 is formed of a plurality of hollow or tube-form barrel segments of which at least one is rotatable. The plurality of barrel segments is modular; the barrel segments can be interchanged and arranged relative to one another in different configurations, as described in more detail hereinafter. Example configurations are shown in Figures 2-4, although it will be appreciated that other configurations also fall within the scope of the disclosure, and that the extruder barrel assembly may alternatively have a different number of barrel segments to the six described with reference to this example, such as two barrel segments in which at least one is a rotatable barrel segment. It is possible, for example, for a rotatable barrel segment to be combined with a single elongate barrel segment that extends along a full length of an extrusion screw of the extruder barrel assembly.

As shown schematically in Figure 2, the extruder barrel assembly 14 is formed of six barrel segments arranged in series with one another; in this configuration there are five non-rotatable barrel segments 20 and one rotatable barrel segment 22 downstream of the non-rotatable barrel segments 20. Each of the six barrel segments 20, 22 defines a bore portion extending therethrough, from an inlet of the respective barrel segment 20, 22 to an outlet of the respective barrel segment 20, 22. The bore portions of the barrel segments 20, 22 together define an extrusion bore 24 that extends from a first end 26 of the extruder barrel assembly 14, to a second end 28 of the extruder barrel assembly 14. The extrusion bore 24, in this example, has a constant diameter between the first end 26 and the second end 28, although it will be appreciated that this may not be the case in other examples. Each of the six bore portions that form the extrusion bore 24 are co-axial in this example, and the extrusion bore 24 has a longitudinal axis 2 extending through a centre of each of the six bore portions that form the extrusion bore 24 from the first end 26 to the second end 28.

The bore portions of the non-rotatable barrel segments 20 each has a substantially smooth surface defining the extrusion bore 24. The extruder barrel assembly 14 has an extrusion screw 30 extending along the longitudinal axis 2 through the five bore portions of the extrusion bore 24 that are defined by the non-rotatable barrel segments 20. The extrusion screw 30 does not extend into the bore portion of the rotatable barrel segment 22. The extrusion screw 30 is made up of five screw sections 32, which are removably attachable to one another in different sequences. A pitch of each screw section 32 can be different to a pitch of each of the other screw sections 32, although it will be appreciated that it is also possible for a pitch of at least two of the screw sections 32 to be equal to one another. It is possible to replace the extrusion screw 30 comprising sections 32 with a single-piece extrusion screw. Additionally, a helical internal surface of the extrusion bore 24 could entirely replace the extrusion screw 30 wherein at least some of the helical internal surface is rotatable about a longitudinal axis of the extrusion bore 24.

The bore portion of the rotatable barrel segment 22 has a substantially smooth surface 34 that defines the extrusion bore 24. The rotatable barrel segment 22 is rotatable in either circumferential direction so as to rotate the surface 34 about the longitudinal axis 2, and relative to the non-rotatable barrel segments 20.

Each of the barrel segments 20, 22 has a respective heater 38, and each heater 38 is independently controllable by the controller 8. Optionally, only certain barrel segments 20, 22 can be provided with a heater 38. It is also possible for none of the barrel segments 20, 22 to have a heater 38. One or more coolers and/or fans can also or alternatively be provided in a similar configuration to the depicted heaters 38.

The first drive system 10 of the extrusion system 1 has a drive motor 40 and a gear box 42. A first end of the extrusion screw 30, adjacent to the first end 26 of the extruder barrel 14 is fixed to a shaft 44 that extends into the gear box 42.

The second drive system 18 comprises a drive motor 46 and a worm gear (not shown). The worm gear is operatively meshed with a spline (not shown) of the rotatable barrel segment 22. Together, the rotatable barrel segment 22 and the second drive system 18 form an extruder barrel system.

The user interface 6 in this example is a touch screen, via which a user can input a number of different commands to generate respective input signals to the controller 8. The controller 8 is arranged to receive the input signals provided at the user interface 6, and to control operation of the first and second drive systems 10, 18 and the heaters 38 in response to the input signals.

In use of the extrusion system 1, a user inputs a start command at the user interface 6, which causes an input signal to be sent to the controller 8. In response, the controller 8 causes the extrusion system 1 to start performing an extrusion process according to input signals, a pre-programmed sequence stored in a memory and/or feedback signals from sensors (not shown) for detecting a parameter indicative of a condition within the extrusion bore 24. That is, the controller 8 causes the drive motor 40 of the first drive system 10 to operate, which causes rotation of the shaft 44 and, in turn, causes the extrusion screw 30 to rotate about the longitudinal axis 2 within the extrusion bore 24. The controller 8 also causes the drive motor 46 of the second drive system 18 to rotate which, in turn, causes the surface 34 of the rotatable barrel segment 22 to rotate about the longitudinal axis 2. The controller 8 further selectively heats the heaters 38 of the barrel segments 20, 22. A pre-programmed sequence may comprise a ramp-up stage and an operative stage. During the ramp-up stage, one or more of the barrel segments 20, 22 of the extruder barrel assembly 14 is brought up to a predetermined temperature for the operative stage, the extrusion screw 30 is accelerated to a predetermined speed of rotation for the operative stage, and the rotatable barrel segment 22 is accelerated to a predetermined speed of rotation for the operative stage.

The controller 8 causes ingredients to enter the extruder barrel 14 via the hopper 12, which are pushed towards the second end 28 of the extruder barrel 14 by the rotation of the extrusion screw 10. Thermal energy is imparted to the ingredients by the heaters 38, and also to some extent by energy being imparted to the ingredients by the turning of the extrusion screw 30. The ingredients receive mechanical energy from the extrusion screw 30 whilst passing along the non-rotatable barrel segments 20, and from the rotation of the surface 34 of the rotatable barrel segment 22 whilst passing along the extrusion bore 24. The different barrel segments 20, 22 of the extruder barrel assembly 14 impart different mechanical energy on the ingredients due to the different conditions within each barrel segment 20, 22, to form, from the ingredients, an extrudate having desired characteristics. Upon reaching the second end 28 of the extruder barrel 14, the extrudate is pushed through the die plate 16 to form an extruded product. During the extrusion process, the controller 8 may alter a temperature of one or more of the heaters 38 to alter characteristics of the extrudate. The controller 8 may, additionally or alternatively, alter a speed of rotation of either drive motor 40, 46, and therefore the speed of the respectively controlled barrel segments 20, 22, to alter characteristics of the extrudate. This may be in response to a predefined sequence stored in a memory, in response to feedback from the sensors, or in response to specific input signals received from the user interface 6.

A speed and direction of rotation of the rotatable barrel segment 22 relative to rotation of the extrusion screw 30 affects pressure within the extrusion bore 24. For example, pressure can be increased by rotating the rotatable barrel segment 22 in an opposite direction to the extrusion screw 30, and decreased by rotating the rotatable barrel segment 22 in the same direction as the extrusion screw 30. The rotatable barrel segment 22 may essentially be controlled so as to be 'invisible', or 'transparent' along the length of the extruder barrel 24, so that the rotatable barrel segment 22 does not alter pressure along the extrusion bore 24. This could be achieved, for example, by causing the rotatable barrel segment 22 to rotate at the same speed as a speed of rotation of extrudate entering the rotatable barrel segment 22 from the non-rotatable barrel segments 20. Controlling the barrel conditions at the rotatable barrel segment 22 may be beneficial in creating desired characteristics in the extrudate, for example by providing additional length along the extruder barrel assembly 24 along which the extrudate is cooled.

Example alternative configurations of the extruder barrel assembly 14 will now be described.

In the configuration shown in Figure 3, the extruder barrel assembly 14 is formed of four non-rotatable barrel segments 20, and two rotatable barrel segments 22a, 22b downstream of the non-rotatable barrel segments 20. The four non-rotatable barrel segments 20 are the same as the non-rotatable barrel segments 20 described with reference to the configuration shown in Figure 2, and each has a screw section 32 of an extrusion screw 30 extending therethrough. A first of the two rotatable barrel segments 22a is a first type of rotatable barrel segment that is the same as the rotatable barrel segment 22 described with reference to the configuration shown in Figure 2. A second of the two rotatable barrel segments 22b is a second type of rotatable barrel segment that has a helical protrusion 36 extending from the surface 34 defining the extrusion bore 24. The helical protrusion 36 extends around a periphery of the portion of the extrusion bore 24 defined by the second of the two rotatable barrel segments 22b, and radially into the extrusion bore 24. The helical protrusion 36 is integral with the surface 34.

When the extruder barrel assembly 14 is in the configuration shown in Figure 3, the second drive system 18 is arranged to rotate the first of the two rotatable barrel segments 22a in response to commands from the controller 8. The extrusion system 1 also has a third drive system (not shown) arranged to rotate the second of the two rotatable barrel segments 22b in response to commands from the controller 8. The controller 8 controls the second drive system 18 independently of the third drive system so that the two rotatable barrel segments 22a, 22b can be rotated at different speeds and/or directions to one another. In other examples, the second drive system 18 could be arranged to rotate both of the two rotatable barrel segments 22a, 22b and the third drive system could be omitted.

In the configuration shown in Figure 4, the extruder barrel assembly 14 is formed of six rotatable barrel segments 22c-22h each defining a bore portion of the extrusion bore 24. In this configuration, the extruder barrel assembly 14 has no non-rotatable barrel segments and the extruder screw 30 is omitted. A first rotatable barrel segment 22c is a third type of rotatable barrel segment and has a plurality of vanes or blades 48 extending radially inward from the surface 34 defining the extrusion bore 24. Each of the vanes 48 is movably connected to the surface 34, and the controller 38 is arranged to rotate the vanes 48 to alter an angle of the vanes 38 relative to the longitudinal axis 2.

Second and third rotatable barrel segments 22d, 22e are the first type of rotatable barrel segment described herein. Fourth, fifth and sixth rotatable barrel segments, 22f, 22g, 22h are the second type of rotatable barrel segment described herein. Although the helical protrusion 36 of each of the fourth to sixth rotatable barrel segments 22f, 22g, 22h is identical, in other configurations of the extruder barrel assembly 14 having a plurality of the second type of rotatable barrel segment, a pitch, height and/or width of the helical protrusion 36 can vary between the different second types of rotatable barrel segment.

When the extruder barrel assembly 14 has the configuration shown in Figure 4, the extrusion system 1 has a respective drive system (not shown) for each of the six rotatable barrel segments 22c-22h, and a drive system (not shown) to rotate the vanes 48 of the first rotatable barrel segment 22c. Each drive system is arranged to rotate the respective component in response to commands from the controller 8. The controller 8 controls the drive systems independently of one another so that the six rotatable barrel segments 22c-22h can be rotated at different speeds and/or directions to one another. In other examples, a single drive system of the extrusion system 1 could be arranged to rotate two or more of the six rotatable barrel segments 22c-22h.

It will be appreciated that, in examples in which the extruder barrel assembly 14 is free of an extrusion screw, the first drive system 10 may be omitted from the extrusion system 1.

Operation of the extrusion system 1 is performed in substantially the same manner as described above regardless of the configuration of the extruder barrel assembly 14, except that the controller 8 is arranged to also control any additional drive system of the extrusion system 1 to rotate the rotatable barrel segments of the extruder barrel assembly 14.

As mentioned, other configurations of barrel segments within the extruder barrel assembly 14 are possible, for example other combinations of different types of rotatable barrel segment.

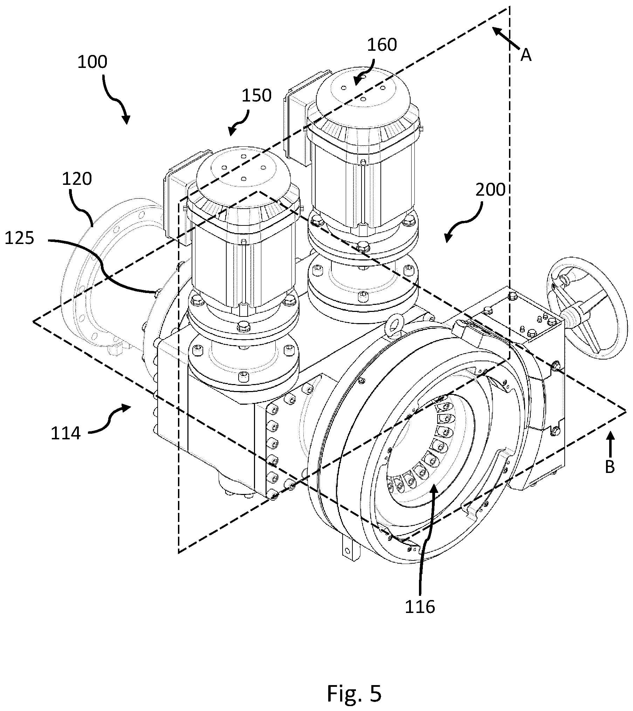

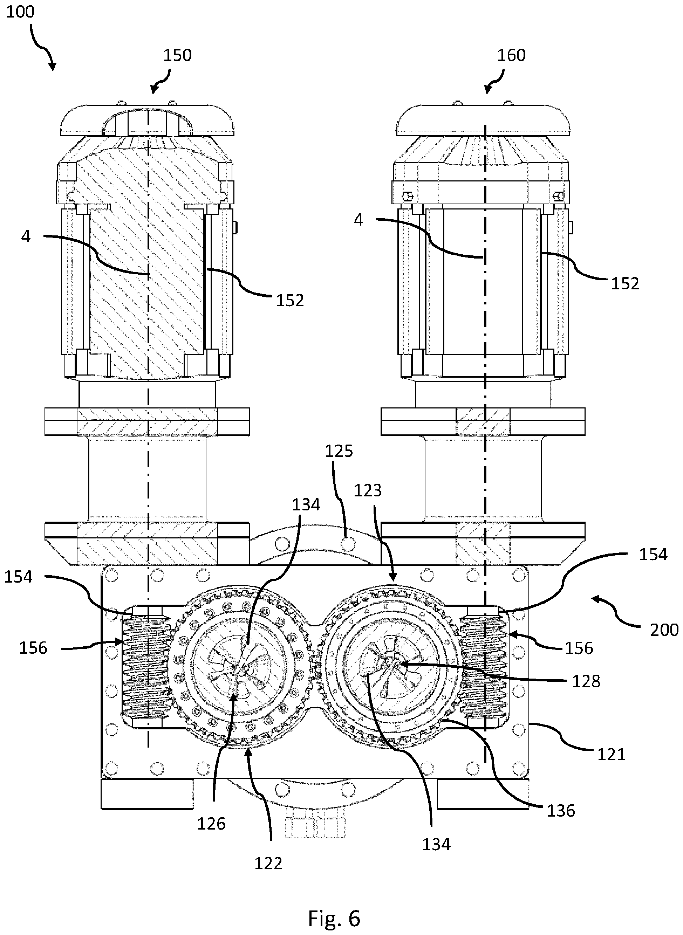

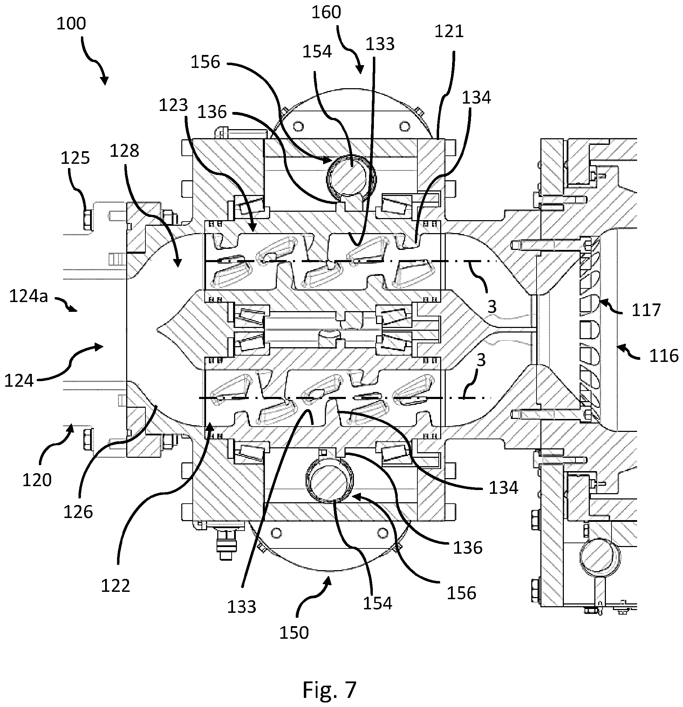

Figures 5-7 show part of an extrusion system 100 according to an example. Although not shown, the extrusion system 100 has a user interface, a controller, a first drive system, and a hopper, for example as described above with reference to the extrusion system 1 depicted in Figures 1-4. The extrusion system 100 also has an extruder barrel assembly 114, part of which is shown in Figure 5, a second drive system 150, a third drive system 160 and a die plate 116.

In this example, the extruder barrel assembly 114 has a plurality of first barrel segments (not shown) arranged in series between the hopper (not shown) and a non-rotatable end barrel segment 120. First and second rotatable barrel segments 122, 123 are disposed within a housing 121. An extrusion bore 124 has a main branch 124a that extends through the plurality of first barrel segments and the non-rotatable end barrel segment 120, and first and second sub-branches 126, 128 that branch from the main branch 124a. Each of the sub-branches 126, 128 extends through a respective one the first and second rotatable barrel segments 122, 123 to the die plate 116. The die plate 116 has a plurality of channels each extending from a respective sub-branch 126, 128 of the extrusion bore 124 to an outlet 117 which comprises a plurality of apertures.

The extruder barrel assembly 114 is a twin extruder along the main branch 124a of the extrusion bore 124, having two screws (not shown) that extend through the plurality of first barrel segments, which are non-rotatable in this example. The non-rotatable barrel segment 120 is releasably attached to the housing 121 by way of a number of bolts 125 disposed around a periphery of the extrusion bore 124. It will be appreciated that in other examples, the extruder barrel assembly 114 is a single extruder along the main branch 124a and/or the first barrel segments comprise at least some rotatable barrel segments, such as the rotatable barrel segment 22 described above with reference to Figures 1 to 4. In a single extruder example, it will be appreciated that the extrusion bore can still be divided into two or more branches at some point along its length so that two or more streams of extrudate can be processed separately but simultaneously in respective rotating barrel segments 22. Similarly, it is possible to have a twin extruder in which there are two distinct parallel extrusion bores which are sealed from one another so that their contents cannot mix. In such an arrangement, the output from each extrusion bore would feed into a respective rotatable barrel arrangement.

The first and second rotatable barrel segments 122, 123 are substantially the same as one another, and the second and third drive systems 150, 160 are substantially the same as one another. Whilst only the first rotatable barrel segment 122 and the second drive system 150 are described in detail herein for brevity, the described features are also applicable to the second rotatable barrel segment 123 with respect to the second sub-branch 128 of the extrusion bore 124, and the third drive system 160.

The first rotatable barrel segment 122 is substantially tubular. A surface 133 defines the portion of the first sub-branch 126 of the extrusion bore 124, the portion of the first sub-branch 126 having a longitudinal axis 3. The surface 133 has a plurality of vanes 134 extending radially inward therefrom. The vanes 134 are integral with the surface 133 and each extend in an axial and circumferential direction around the periphery of the portion of the first sub-branch 126 of the extrusion bore 124. The first rotatable barrel segment 122 is rotatable within the housing 121 to rotate the plurality of vanes 134 about the longitudinal axis 3 of the portion of the first sub-branch 126 of the extrusion bore 124 defined by the first rotatable barrel segment 122.

An outer surface of the first rotatable barrel segment 122 has a plurality of splines 136, which are helically-extending protrusions extending along and around the first rotatable barrel segment 122. In this example, the splines 136 of the first rotatable barrel segment 122 mesh with the splines 136 of the second rotatable barrel segment 123 between the first and second sub-branches 126, 128. It will be appreciated that in other examples there is no such meshing.

The second drive system 150 comprises a motor 152, a shaft 154 and a worm gear 156 fixed on the shaft 154. The shaft 154 is connected to the motor 152 such that operation of the motor 152 results in axial rotation of the shaft 154 and, in turn, the worm gear 156. The worm gear 156 meshes with the splines 136 defining the outer surface of the first rotatable barrel segment 122. The shaft 154 and the worm gear 156 extend along, and are rotatable about, a respective drive system axis 4, which is orthogonal to the longitudinal axis 3 of the portion of the sub-branch 126 of the extrusion bore 124 extending through the first rotatable barrel segment 122.

The rotatable barrel segments 122, 123, housing 121 and the second and third drive systems 150, 160 together form an extruder barrel system 200. One or more extruder barrel systems having a rotatable barrel segment and associated drive system may be selectively included in the extruder barrel assembly 114 in other configurations. The extrusion system 100 may alternatively be configurable without such an extruder barrel system, for example with the non-rotatable barrel segment 120 directly fixed to the die plate 116.

Although not visible in Figures 5-7, the extruder barrel system 200 has two additive ports, which are located in the first and second sub-branches 126, 128 upstream of the first and second rotatable barrel segments 122, 123. Each additive port is arranged to inject an additive, in this example a dye, into the respective sub-branch 126, 128 of the extrusion bore 124 to dye extrudate travelling along that sub-branch. In other examples, the additive may be other than, or additional to, the dye, for example steam or a flavouring. Different dyes can be used in each sub-branch 126, 128 so that the extrudate in each sub-branch is of a different colour.

Operation of the extrusion system 100 shown in Figures 5-7 is similar to that of the extrusion system 1 shown in Figure 1 and will not be described again in full for brevity. In use of the extrusion system 100, extrudate is propelled along the twin extruder in a known manner and expelled from the non-rotatable barrel segment 120 in a direction towards the die plate 116. The extrudate then travels along the first sub-branch 126 and the second sub-branch 128 to form respective first and second streams of extrudate. An additive is injected into the first and/or second streams of extrudate at the additive ports. Then, the first stream of the extrudate enters the first rotatable barrel segment 122 and the second stream of the extrudate enters the second rotatable barrel segment 123.

A controller (not shown) causes operation of the motors 152 of the second and third drive systems 150, 160. In turn, the shafts 154 and worm gears 156 rotate about the respective drive system axes 4. Since the worm gears 156 each mesh with the splines 136 of the respective first and second rotatable barrel segments 122, 123, the rotatable barrel segments 122, 123 are caused to rotate about their respective longitudinal axes 3. In turn, this causes rotation of the plurality of vanes 134 about the respective longitudinal axes 3, which mixes the additives into the first and second streams of extrudate. It will be appreciated that additive ports can also be provided in the rotatable barrel segments 122, 123 themselves so that additives can be added directly to extrudate in the rotatable barrel segments 122, 123.

Since the splines 136 of the first and second rotatable barrel segments 122, 123 mesh with one another, the first and second rotatable barrel segments rotate in opposite directions to one another and at the same rotational speed as one another. This creates different pressures in the first and second sub-branches 126, 128 and thus results in first and second streams of extrudate having different characteristics, such as a different volume flow rate. During extrusion by the extrusion system 100, the controller can change a speed and/or direction of rotation of the rotatable barrel segments 122, 123 to change energy imparted to the extrudate.

Although not shown in this example, the extrusion system 100 can have heaters to heat extrudate in the first and second sub-branches 126, 128 to different temperatures, to thereby impart different characteristics to the first and second streams of the extrudate. Coolers and/or fans can also be included in the extrusion system 100.

Downstream of the first and second rotatable barrel segments 122, 123, the first and second streams of the extrudate enter the die plate 116 and are split amongst various channels defined by the die plate 116. Each of the channels extends to the outlet 117, at which a channel containing a portion of the first stream of the extrudate meets a channel containing a portion of the second stream of the extrudate, and an extruded product containing extrudate from both the first stream and the second stream is expelled from the outlet 117. In this way, the extrusion system 100 can produce a product having parts of different characteristics from extrudate streams produced in the same extrusion bore. One possibility is for the different extrudate streams to be recombined, for example in a twist head downstream of the outlet 117.

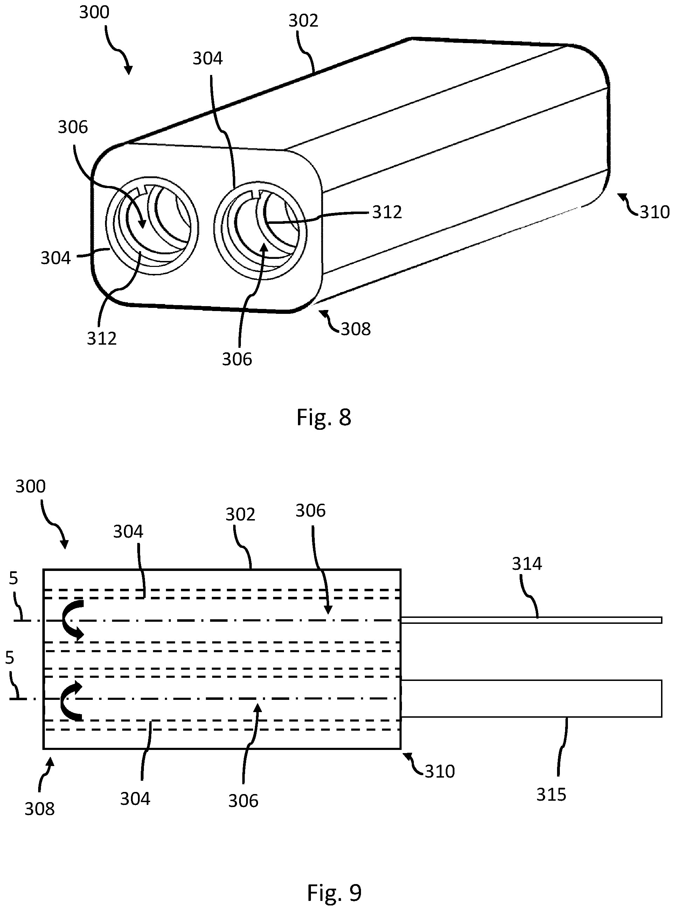

Figure 8 shows a schematic view of a rotatable extruder barrel segment 300. The rotatable extruder barrel segment 300 can be used in lieu of a non-rotatable barrel segment of an extruder barrel assembly. The rotatable barrel segment 300 can alternatively be added to a downstream end of an extruder barrel assembly to provide further processing of extrudate. The rotatable barrel segment 300 may be for use in the example extrusion systems 1, 100 described herein.

The rotatable extruder barrel segment 300 is formed of a housing 302 and two liners 304. The housing 302 defines two bores 306 extending therethrough, and each of the two liners 304 is removably locatable in a respective one of each of the two bores 306. The two bores 306 are parallel to one another and have the same diameter. Each of the two bores 306 has a respective longitudinal axis 5 extending through a centre of the respective bore 306 from an inlet end 308 of the housing 302 and an outlet end 310 of the housing 302. In other examples the two bores 306 can be non-parallel, have different diameters to one another and/or have a varying diameter between the inlet end 308 and the outlet end 310.

Each liner 304 is removably receivable in the respective one of the two bores 306, and is rotatable about the respective longitudinal axis 5 relative to the housing 302. Each liner 304 is substantially tubular, and has a female thread 312 disposed on an inner surface thereof. The female thread 312 protrudes radially inwardly towards an interior of the liner 304. The two liners 304 are formed from steel in this example.

The liners 304 can be selectively replaced. A replacement liner can be of the same geometry as a liner 304 that has been removed, or have different characteristics. Such different characteristics may comprise a material from which the liner is formed, a wall thickness, a pitch, angle, height or direction of the female thread, omission of the female thread and/or inclusion of one or more other features protruding into the interior of the liner.

Each of the liners 304 is independently rotatable within the housing 302 by a drive system for use with the rotatable extruder barrel segment 300. Rotating the liners 304 in different directions, as schematically shown in Figure 9 and indicated by the arrows, can result in extrudate streams 314, 315 of different diameters being extruded from the respective bores 306. In the example of Figure 9, the direction of rotation of the upper liner 304 (as viewed in Figure 9) has resulted in a higher pressure within the respective bore 306 than in the other bore 306. Accordingly, there is a smaller throughput through the upper liner 304 and an extrudate stream 314 expelled from the upper liner 304 has a smaller diameter than an extrudate stream 315 expelled from the lower liner 304.

Although not shown in this example, the rotatable extruder barrel segment 300 can have additive ports to inject additive into the interior of one or both liners 304. The rotatable extruder barrel segment 300 can also include a heater to selectively heat the liners 304 and, by extension, extrudate within the interior of the liners 304. Possible use of one or more coolers and/or fans is also envisaged.

In other examples, the rotatable barrel segment 300 may have only one bore 306 and one liner 304, or more than two bores 306 and respective liners 304.

The above embodiments are to be understood as illustrative examples of the invention. Further embodiments of the invention are envisaged. For example, any number and configuration of rotatable barrel segments may be comprised in an extruder barrel assembly, extruder barrel system or extrusion system according to examples. In other examples, the rotatable barrel segments may have any other suitable features extending radially into the extruder barrel. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An extruder barrel assembly having an extrusion bore, the extruder barrel assembly comprising:
a rotatable barrel segment defining a portion of the extrusion bore between an inlet for receiving extrudate at a first end of the rotatable barrel segment and an outlet for expelling extrudate at a second end of the rotatable barrel segment opposite the first end; and
at least one other barrel segment, each at least one other barrel segment defining a respective additional portion of the extrusion bore,
wherein the rotatable barrel segment is rotatable relative to the at least one other barrel segment, about a longitudinal axis of the portion of the extrusion bore between the first and second ends.

2. The extruder barrel assembly of claim 1, wherein the rotatable barrel segment is rotatable at different speeds.

3. The extruder barrel assembly of claim 1 or claim 2, wherein the rotatable barrel segment is rotatable in different circumferential directions about the longitudinal axis of the portion of the extrusion bore between the first and second ends of the rotatable barrel segment.

4. The extruder barrel assembly of any one of the preceding claims, wherein the rotatable barrel segment comprises one or more features protruding radially into the portion of the extrusion bore between the inlet and the outlet of the rotatable barrel portion, the one or more features configured to impart mechanical energy to extrudate travelling from the inlet to the outlet of the rotatable barrel segment.

5. The extruder barrel assembly of claim 4, wherein the one or more features comprises a helix extending around a surface defining the portion of the extrusion bore between the inlet and the outlet of the rotatable barrel segment.

6. The extruder barrel assembly of claim 4 or claim 5, wherein the one or more features comprises a vane, wherein the vane is movable relative to a surface of the rotatable barrel segment defining the portion of the extrusion bore between the inlet and the outlet of the rotatable barrel segment, to change an angle of the vane relative to the longitudinal axis of the portion of the extrusion bore between the first and second ends of the rotatable barrel segment.

7. The extruder barrel assembly of any one of the preceding claims, wherein the rotatable barrel segment comprises a housing and a liner, wherein the liner is releasably locatable within the housing and defines the portion of the extrusion bore between the inlet and the outlet of the rotatable barrel segment.

8. The extruder barrel assembly of any one of the preceding claims, wherein the rotating barrel segment is free of an extrusion screw.

9. The extruder barrel assembly of any one of the preceding claims, wherein the extrusion bore comprises two or more branches, at least one of which comprises the rotatable barrel segment.

10. The extruder barrel assembly of any one of the preceding claims, wherein the extruder barrel assembly comprises a plurality of rotatable barrel segments.

11. The extruder barrel assembly of claim 10, wherein two or more of the plurality of rotatable barrel segments are rotatable independently of one another.

12. An extrusion system comprising an extruder barrel assembly according to any one of the preceding claims, and a drive system configured to selectively rotate the, or each, rotatable barrel segment.

13. An extrusion system according to claim 12, wherein the extruder barrel assembly comprises a plurality of rotatable barrel segments, and the drive system is configured to rotate at least two of the plurality of rotatable barrel segments independently of one another.

14. An extruder barrel system comprising:
a rotatable barrel segment defining a bore having an inlet to receive extrudate at a first end of the rotatable barrel segment and an outlet through which extrudate can be expelled from a second end of the rotatable barrel segment opposite the first end; and
a drive system configured to rotate the rotatable barrel segment about a longitudinal axis of the bore, the longitudinal axis extending between the first and second end.

15. An extruder barrel assembly comprising a plurality of barrel segments that together form the extruder barrel assembly and define an extrusion bore extending therethrough, wherein at least one of the plurality of barrel segments is free of an extrusion screw and is rotatable relative to at least one other of the plurality of barrel segments, about a longitudinal axis of a portion of the extrusion bore extending through the respective barrel segment.

## Amended claims

### Amended claims in accordance with Rule 137(2) EPC.

1. An extruder barrel assembly (114) having an extrusion bore (124), the extruder barrel assembly comprising:
a rotatable barrel segment (122,123) defining a portion of the extrusion bore between an inlet for receiving extrudate at a first end of the rotatable barrel segment and an outlet for expelling extrudate at a second end of the rotatable barrel segment opposite the first end; and
at least one other barrel segment (120), each at least one other barrel segment defining a respective additional portion of the extrusion bore,
wherein the rotatable barrel segment is rotatable relative to the at least one other barrel segment, about a longitudinal axis (4) of the portion of the extrusion bore between the first and second ends, and
**characterised in that** the extruder barrel assembly comprises a split in the extrusion bore at which the extrusion bore is split into multiple branches (126, 128), the rotatable barrel segment being downstream of the split and arranged in a first branch (126) of the multiple branches.

2. The extruder barrel assembly of claim 1, wherein the rotatable barrel segment is a first rotatable barrel segment (122), and the at least one other barrel segment comprises a second rotatable barrel segment (123) downstream of the split and arranged in a second branch (128) of the multiple branches.

3. The extruder barrel assembly of claim 2, wherein the first rotatable barrel segment is rotatable at a different speed to the second rotatable barrel segment.

4. The extruder barrel assembly of claim 2 or claim 3, wherein the first rotatable barrel segment is rotatable in an opposite direction to the second rotatable barrel segment.

5. The extruder barrel assembly of any one of claims 2 to 4, wherein the first rotatable barrel segment and the second rotatable barrel segment are rotatable independently of one another.

6. The extruder barrel assembly of any one of the preceding claims, wherein:
the rotatable barrel segment comprises one or more features (134) protruding radially into the portion of the extrusion bore between the inlet and the outlet of the rotatable barrel portion, the one or more features configured to impart mechanical energy to extrudate travelling from the inlet to the outlet of the rotatable barrel segment; and
the one or more features comprises a vane (48), wherein the vane is movable relative to a surface (133) of the rotatable barrel segment defining the portion of the extrusion bore between the inlet and the outlet of the rotatable barrel segment, to change an angle of the vane relative to the longitudinal axis of the portion of the extrusion bore between the first and second ends of the rotatable barrel segment.

7. The extruder barrel assembly of any one of the preceding claims, comprising an additive port located in the first branch, the additive port configured to selectively permit additive to be introduced into the extrusion bore at the first branch.

8. The extruder barrel assembly of claim 7, wherein the additive port is upstream of the rotatable barrel segment.

9. The extruder barrel assembly of any one of the preceding claims, wherein the rotatable barrel segment comprises a housing (302) and a liner (304), wherein the liner is releasably locatable within the housing and defines the portion of the extrusion bore between the inlet and the outlet of the rotatable barrel segment.

10. The extruder barrel assembly of claim 9, wherein the housing is fixed and the liner is rotatable relative to the housing, about the longitudinal axis of the portion of the extrusion bore between the first and second ends of the rotatable barrel segment, when the liner is releasably located within the housing.

11. The extruder barrel assembly of any one of the preceding claims, wherein the, or each, rotatable barrel segment is free of an extrusion screw.

12. The extruder barrel assembly of any one of the preceding claims, wherein the rotatable barrel segment comprises a first thermal regulator (38) configured to regulate a temperature within the portion of the extrusion bore between the inlet and the outlet of the rotatable barrel segment.

13. The extruder barrel assembly of claim 12, when dependant on at least claim 2, wherein:
the second rotatable barrel segment comprises a second thermal regulator (38) configured to regulate a temperature within the portion of the extrusion bore between the inlet and the outlet of the second rotatable barrel segment; and
the first and second thermal regulators are independent of one another.

14. An extrusion system comprising an extruder barrel assembly according to any one of the preceding claims, and a drive system (150, 160) configured to selectively rotate the, or each, rotatable barrel segment.

15. An extrusion system according to claim 14, when comprising an extruder barrel assembly according to at least claim 2, wherein the drive system is configured to rotate the first rotatable barrel segment and the second rotatable barrel segment independently of one another.
